# EUROPÄISCHE PATENTSCHRIFT

(11) **EP 2 394 358 B1**
(45) Veröffentlichungstag und Bekanntmachung des Hinweises auf die Patenterteilung: **28.11.2012**
(21) Anmeldenummer: 10704745.8
(22) Anmeldetag: 02.02.2010
(51) Int. Cl.: H02P 27/08, B60L 11/18, H02J 7/14, H02J 7/24, H02K 1/14, H02M 7/48

(54) **ANTRIEBSSYSTEM, VERFAHREN ZUM BETREIBEN EINES ANTRIEBSSYSTEMS UND VERWENDUNG**
DRIVE SYSTEM, METHOD FOR OPERATING A DRIVE SYSTEM, AND USE THEREOF
SYSTÈME D'ENTRAÎNEMENT, PROCÉDÉ DE FONCTIONNEMENT D'UN SYSTÈME D'ENTRAÎNEMENT ET UTILISATION

(30) Priorität: 06.02.2009 DE 102009007960
(43) Veröffentlichungstag der Anmeldung: 14.12.2011
(73) Patentinhaber: SEW-EURODRIVE GmbH & Co. KG, 76646 Bruchsal (DE)
(72) Erfinder: LEWANDOWSKI, Marek, 71272 Renningen (DE); HAUCK, Matthias, 68723 Schwetzingen (DE); MAHLEIN, Jochen, 76139 Karlsruhe (DE); SCHMIDT, Josef, 76676 Graben-Neudorf (DE)
(86) Internationale Anmeldenummer: PCT/EP2010/000594
(87) Internationale Veröffentlichungsnummer: WO 2010/089071

(56) Entgegenhaltungen:
- DE-C1- 19 742 429
- JP-A- 2005 184 947
- US-A1- 2005 231 152
- US-A1- 2008 094 013
- US-B1- 6 313 557

## Beschreibung

Die Erfindung betrifft ein Antriebssystem, ein Verfahren zum Betreiben eines Antriebssystems und eine Verwendung.

Es ist bekannt, Elektromotoren von einem Wechselrichter zu speisen, der aus einem Energiespeicher versorgt ist, wie beispielsweise Zwischenkreiskondensator eines Umrichters. Es liegt auch nahe, bei batterieversorgten Fahrzeugen mit elektromotorischem Antrieb, den Elektromotor aus einem Wechselrichter zu speisen, der von der Batterie versorgt ist. Dazu werden Schaltungen mit Induktivitäten benötigt, die z.B in den Dokumenten JP 2005184947, US 2008094013, DE19741429 und US86313557 beschrieben werden. Der Erfindung liegt daher die Aufgabe zugrunde, eine kostengünstige Ladeschaltung für einen Energiespeicher vorzusehen.

Erfindungsgemäß wird die Aufgabe bei dem Antriebssystem nach den in Anspruch 1 und bei dem Verfahren zum Betreiben eines Antriebssystems nach den in Anspruch 6 und bei der Verwendung nach den im abhängigen Anspruch 11 angegebenen Merkmalen gelöst.

Wichtige Merkmale der Erfindung bei dem Antriebssystem sind, dass es einen Elektromotor, einen Wechselrichter und einen Energiespeicher umfasst,
wobei der Elektromotor von dem Wechselrichter speisbar ist, der aus dem Energiespeicher versorgbar ist,
wobei zumindest einer Statorwicklung des Elektromotors ein von einem Schalter steuerbarer Strom zuführbar ist, der aus einer vom Energiespeicher unterschiedlichen elektrischen Energiequelle versorgt ist.

Von Vorteil ist dabei, dass eine sehr kompakte Ladeschaltung verwirklichbar ist, wobei sogar die elektrische Energiequelle ein weit geringeres Spannungsniveau aufweisen darf als die zum Laden des Energiespeichers notwendige Spannung. Denn dadurch, dass die Statorwicklung als Induktivität für die Ladeschaltung, beispielsweise nach Art eines Buck-Converters, verwendbar ist, ist sogar ein Hochsetzen des Spannungsniveaus ermöglicht. Mit anderen Worten gesagt, ist also eine Weitspannungsversorgte Ladeschaltung ermöglicht.

Weiter ist von Vorteil, dass die Statorwicklungen auch zumindest teilweise die Funktion eines zusätzlichen Energiespeichers aufweisen und darüber hinaus auch zur Glättung des Ladestroms beitragen.

Bei einer vorteilhaften Ausgestaltung ist die elektrische Energiequelle mittels eines anderen Energiespeichers ausgeführt oder mittels einer ein- oder mehrphasigen Wechselspannungsquelle mit nachgeschaltetem Gleichrichter. Von Vorteil ist dabei, dass der andere Energiespeicher ein anderes Spannungsniveau aufweisen darf als die Ladespannung. Es ist also eine Weitspannung verwendbar, beispielsweise auch ein Versorgungsnetz mit schwankender oder variabler Spannung.

Bei einer vorteilhaften Ausgestaltung ist einer der oder die Energiespeicher ein Kondensator, ein Ultracap-Kondensator oder eine Batterie. Von Vorteil ist dabei, dass je nach Bedarf eine Kapazität wählbar ist, die den Betrieb der geplanten Anwendung gewährleistet.

Bei einer vorteilhaften Ausgestaltung ist die elektrische Energiequelle der Ausgang eines netzgespeisten, drehstromgespeisten oder mit einphasigem Wechselstrom versorgten Gleichrichter, insbesondere wobei der Gleichrichter einphasig oder mehrphasig ausgeführt ist. Von Vorteil ist dabei, dass eine unipolare Spannung verwendbar ist, die nicht besonders geglättet sein muss.

Bei einer vorteilhaften Ausgestaltung sind die Statorwicklungen des Elektromotors in Sternpunktschaltung verschaltet. Von Vorteil ist dabei, dass alle Statorwicklungen in einfacher Weise als Induktivitäten der Ladeschaltung verwendbar sind. Insbesondere ist bei Verwendung des mit den Statorwicklungen verbundenen Wechselrichters als Hochsetzsteller eine Verteilung des Ladestroms auf die Statorwicklungen ermöglicht. Die ohmschen Verlustwärmeleistungen sind somit reduzierbar.

Bei einer vorteilhaften Ausgestaltung ist zwischen der Statorwicklung und dem Schalter eine zusätzliche Induktivität vorgesehen. Von Vorteil ist dabei, dass niedrigere Schaltfrequenzen verwendbar sind zur Erzeugung von gleich großem Ladestrom, wodurch dann auch die Schaltverluste der vom Wechselrichter und/oder Schalter umfassten Halbleiterschalter reduzierbar sind. Außerdem sind größere Spannungsunterschiede zwischen Ladespannung und Spannungsniveau der Energiequelle ermöglicht.

Bei einer vorteilhaften Ausgestaltung ist die zusätzliche Induktivität zwischen dem Sternpunkt und dem Schalter vorgesehen, insbesondere zur Durchleitung des vom Schalter steuerbaren Stromes. Von Vorteil ist dabei, dass eine Aufteilung des Ladestromes auf die Statorwicklungen erfolgt kann und somit geringere Verluste erreichbar sind.

Bei einer vorteilhaften Ausgestaltung ist der Effektivwert oder Spitzenwert der den Gleichrichter versorgenden Spannungsquelle oder der den Schalter versorgenden, vom Energiespeicher unterschiedlichen elektrischen Energiequelle kleiner als die Ladespannung für den Energiespeicher, insbesondere also kleiner ist als die zum Laden des Energiespeichers notwendige Spannung, insbesondere Eingangsspannung des Wechselrichters. Von Vorteil ist dabei, dass eine Weitspannungsenergiequelle verwendbar ist als den Schalter versorgende Energiequelle.

Wichtige Merkmale bei dem Verfahren zum Betreiben eines Antriebssystems sind, dass das Antriebssystem einen aus einem Energiespeicher versorgbaren Elektromotor umfasst, wobei über zumindest eine Statorwicklung des Elektromotors ein Strom aus einer vom Energiespeicher unterschiedlichen Energiequelle gesteuert zugeführt wird zum Laden des Energiespeichers.

Von Vorteil ist dabei, dass zum Laden der Energiequelle ein Ladeverfahren verwendbar ist, das die Statorwicklungen des sowieso vorhandenen Elektromotors verwendet. Somit ist nicht nur eine Weitspannung, wie beispielsweise ein Netz mit schwankender Spannung, als Energiequelle für die Ladeschaltung verwendbar sondern auch eine sehr kompakte Ausführung, da die Statorwicklungen des Motors verwendet werden zum Betreiben eines Ladeschaltung.

Bei einer vorteilhaften Ausgestaltung sind die Statorwicklungen mit einem Drehspannungssystem speisbar, das aus dem Energiespeicher erzeugbar ist. Von Vorteil ist dabei, dass ein konventioneller Wechselrichter verwendbar ist, der aus drei Halbbrücken von jeweils einer Reihenschaltung von zwei Halbleiterschaltern besteht und somit eine pulsweitenmodulierte Ansteuerung zur Erzielung des motorischen oder generatorischen Betriebs der Halbleiterschalter erreichbar ist.

Bei einer vorteilhaften Ausgestaltung wird der Wechselrichter pulsweitenmoduliert oder blockkommutiert angesteuert, insbesondere zum motorischen oder generatorischen Betrieb des Elektromotors. Von Vorteil ist dabei, dass einfache Verfahren anwendbar sind.

Bei einer vorteilhaften Ausgestaltung wird der Schalter pulsweitenmoduliert angesteuert. Von Vorteil ist dabei, dass eine einfache und wenig aufwendige Betriebsweise realisierbar ist, insbesondere ist auch eine Regelung der Ladespannung auf einen Sollwert hin ermöglicht, indem als Stellgröße das Pulsweitenmodulationsverhältnis verwendbar ist.

Bei einer vorteilhaften Ausgestaltung ist der Wechselrichter mehrphasig ausgeführt und die Ansteuersignale für die Schalter des Wechselrichters synchron, zweitversetzt synchron oder asynchron ausgeführt werden. Von Vorteil ist dabei, dass bei synchroner Betriebsweise eine besonders einfache Ansteuerung ausführbar ist, bei asynchroner Betriebsweise eines gleichmäßige und unabhängige Auslastung der Halbbrücken des Wechselrichters sowie der Statorwicklungen ausführbar ist und bei synchroner Betriebsweise mit Zeitversatz eine gleichförmige Auslastung der Halbbrücken und der Statorwicklungen in einfacher Weise ermöglicht ist.

Bei einer vorteilhaften Ausgestaltung wird das Nachladen des Energiespeichers zyklisch wiederholt, insbesondere das Nachladen abwechselnd mit dem motorischen oder generatorischen Betrieb des Elektromotors ausgeführt wird. Von Vorteil ist dabei, dass die Statorwicklungen nur auf das Maximum des in den Betriebsweisen auftretenden Stroms ermöglicht ist. Alternativ ist auch ein gleichzeitiges Erzeugen von Ladestrom bei motorischer und generatorischer Betriebsweise des Elektromotors ermöglicht, wobei allerdings die Statorwicklungen entsprechend stärker dimensioniert werden müssen.

Weitere Vorteile ergeben sich aus den Unteransprüchen.

### Bezugszeichenliste

1 Wechselrichter zur Speisung des Elektromotors
2 Gleichrichter
3~ dreiphasige Netzspannung
D1 Diode
D2 Diode
S Schalter
M Elektromotor in Sternpunktschaltung
L Induktivität
C Energiespeicher, beispielsweise Batterie oder Kondensator

Die Erfindung wird nun anhand von Abbildungen näher erläutert:

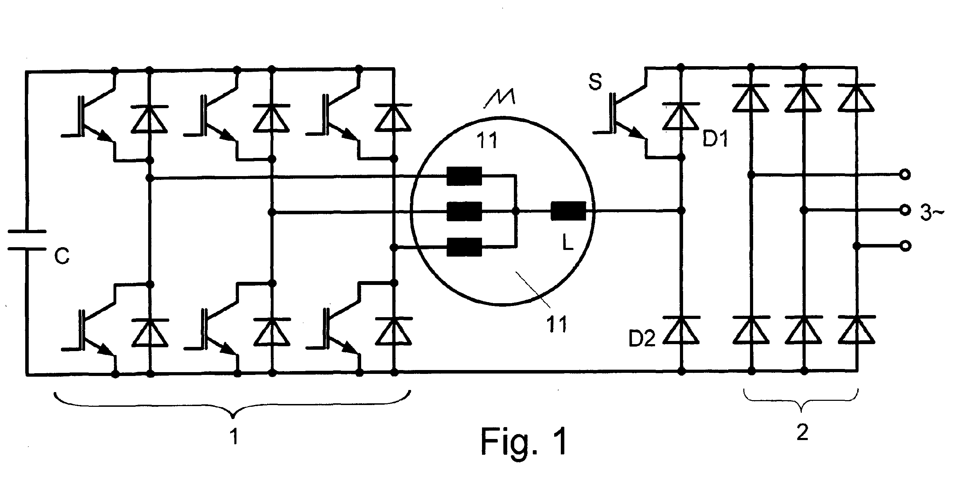

In der Figur 1 ist eine erfindungsgemäße Vorrichtung mit einem schematischen Schaltplan gezeigt.

Hierbei ist aus dem Energiespeicher C, der als Batterie oder Kondensator ausgeführt ist, ein Wechselrichter 1 zur Speisung des Elektromotors M vorgesehen. Die Statorwicklungen des Elektromotors M sind als Drehstromwicklung in Sternpunktschaltung ausgeführt. Somit ist der Elektromotor mit einer vom Wechselrichter bestimmbaren Speisefrequenz, also einem mit dieser Speisefrequenz drehenden Drehspannungssystem versorgbar und auf diese Weise die Drehzahl des Elektromotors steuerbar oder bei Anbringen eines Drehwinkel- oder Drehzahlsensors regelbar auf eine gewünschte Drehzahl oder ein gewünschtes Drehmoment hin.

Im generatorischen Betrieb ist die vom Elektromotor M erzeugte Energie über den Wechselrichter 1 dem Energiespeicher zuführbar.

Der Wechselrichter besteht aus drei Halbbrücken, also Zweigpaaren, die jeweils eine Reihenschaltung von einem oberen und unteren ansteuerbaren Halbleiterschalter umfassen, denen wiederum jeweils eine Diode parallel zugeschaltet ist. Die Halbleiterschalter werden vorzugsweise pulsweitenmoduliert angesteuert. Die Signalelektronik zur Erzeugung der Ansteuersignale für die Halbleiterschalter ist nicht gezeigt.

Des Weiteren ist ein Gleichrichter 2 aus einer dreiphasigen Netzspannung 3∼ zur Erzeugung einer unipolaren Spannung an der Ausgangsseite des Gleichrichters versorgbar. Über einen steuerbaren Schalter S ist Strom aus der unipolaren Spannung über eine Induktivität L dem Sternpunkt des Motors M zuführbar. Dabei arbeitet der Schalter im Wesentlichen einem Buck-Converter entsprechend, wobei allerdings als Induktivität zumindest die Statorwicklungen und gegebenenfalls die optional vorgesehene Induktivität L am Sternpunkt der Statorwicklungen vorgesehen ist und als Last der Wechselrichter mit Energiespeicher wirksam ist.

Dem Schalter S, vorzugsweise einem Halbeleiterschalter, ist eine Diode D1 parallel zugeschaltet, wobei diese Parallelschaltung über die in Reihe geschalteten Diode D2 mit dem unteren Potential der unipolaren Spannung verbunden ist.

Auf diese Weise ist es nun ermöglicht, mittels des Schalters S einen Wechselstrom dem Sternpunkt zuzuführen, so dass über die Dioden des Wechselrichters 1 dem Energiespeicher ein Ladestrom zuführbar ist. Somit ist ein Aufladen des Energiespeichers ermöglicht.

Bei der Erfindung wirken die Statorwicklungen auf den über den Schalter zugeführten Strom glättend und stellen auch einen zusätzlichen Energiespeicher dar.

Dabei ist die Induktivität L im Gehäuse des Elektromotors integriert vorgesehen, also vom Gehäuse des Motors M gehäusebildend umgeben. Auf diese Weise ist ein besonders kompakte Ausführung ermöglicht. Dabei ist vorzugsweise die Wicklung der Induktivität um denselben Kern, insbesondere Statorblechpaket, vorgesehen wie auch die Statorwicklungen. Die Statorwicklungen sind beispielsweise auf nach radial innen gerichtete Zähne des Statorblechpakets vorsehbar und die zusätzliche Induktivität ist auf dem äußeren Umfang des Statorblechpakets vorsehbar, also dem Statorjoch. Somit ist auch die Entwärmung der Statorwicklungen und der zusätzlichen Wicklung in gleicher Weise ausführbar, also ohne zusätzliche Teile. Gleichzeitig ist eine gute Abschirmung zwischen den Statorwicklungen und der zusätzlichen Wicklung ausführbar.

In einem weiteren erfindungsgemäßen Ausführungsbeispiel ist die Induktivität L weggelassen und es werden als Induktivität nur die Induktivitäten der Statorwicklungen verwendet.

In einem weiteren erfindungsgemäßen Ausführungsbeispiel wird der Motor mit Wechselrichter nicht nur zur bloßen Gleichrichtung verwendet sondern als Hochsetzsteller betrieben. Hierzu werden die Schalter entsprechend angesteuert, so dass am Energiespeicher eine weit höhere Spannung erzeugbar ist als der vom Gleichrichter erzeugbare Spitzenspannungswert der unipolaren Spannung. Hierbei bewirken die Induktivitäten der Statorwicklungen bei Schaltvorgängen der Halbleiterschalter des Wechselrichters zusammen und machen die Höhe der Spannung am Energiespeicher steuerbar oder bei Anbringen eines Mittels zur Erfassung der Spannung am Energiespeicher regelbar. Wichtiger Parameter ist hierbei die Schaltfrequenz der Schalter des Wechselrichters und des Schalters S. Trotz einer Netzspannung, deren Spitzenwert und/oder Effektivwert kleiner ist als die für den Energiespeicher notwendige Ladespannung, ist also ein Aufladen des Energiespeichers ermöglicht.

Im motorischen und/oder generatorischen Betrieb des Motors wird der Wechselrichter derart angesteuert, dass eine Drehspannung am Motor anliegt. Dabei sind also die Ansteuersignale abhängig voneinander, so dass die Drehspannung an den Statorwicklungen anliegt. Bei dem beschriebenen Ladebetrieb und nicht antreibendem oder angetriebenem Motor M dürfen die Ansteuersignale für die Schalter der Halbbrücken unabhängig voneinander erzeugt werden.

Die Ansteuerung der drei Halbbrücken, also Zweigpaare, des Wechselrichters ist dabei synchron ausführbar. Wenn jedoch die synchronen Ansteuersignal zueinander einen zeitlichen Versatz aufweisen, ist eine gleichmäßigere Auslastung des Schalters S ermöglicht. Bei einer asynchronen Ausführung der Ansteuersignalen, ist eine weiter verbesserte gleichmäßigere Auslastung der Schalter ermöglicht. Asynchron bedeutet hierbei, dass die den jeweiligen Halbbrücken zugeordneten Ansteuersignalen eine verschiedene Frequenz aufweisen und somit nicht synchron zueinander sind.

In einem weiteren erfindungsgemäßen Ausführungsbeispiel werden die Schalter des Wechselrichters statt pulsweitenmoduliert blockkommutiert angesteuert von der in Figur 1 nicht gezeigten Ansteuerung.

In einem weiteren erfindungsgemäßen Ausführungsbeispiel ist sogar bei motorischem Betrieb des Motors M dem Energiespeicher in der beschriebenen Weise zuführbar, so dass die Kapazität des Energiespeichers langsamer aufgebraucht wird, also der obengenannte Ladestrom zur zumindest teilweisen Speisung des Wechselrichters verwendbar ist. Allerdings müssen hierzu die Statorwicklungen und die Dioden des Gleichrichters entsprechend robust dimensioniert werden.

In einem weiteren erfindungsgemäßen Ausführungsbeispiel sind mehrere Wechselrichter aus dem Energiespeicher versorgt, die jeweils einen Elektromotor speisen, wobei über eine Statorwicklung eines ersten oder mehrerer Elektromotoren der Energiespeicher in der oben geschilderten Weise mit jeweils einem Schalter zur gesteuerten Zufuhr von Strom an die jeweilige Statorwicklung.

## Patentansprüche

1. Antriebssystem, umfassend Elektromotor (11), Wechselrichter (1), Energiespeicher (C),
wobei der Elektromotor (11) von dem Wechselrichter (1) speisbar ist, der aus dem Energiespeicher (C) versorgbar ist,
wobei zumindest einer Statorwicklung des Elektromotor (C) ein von einem Schalter (5) steuerbarer Strom zuführbar ist, der aus einer vom Energiespeicher (C) unterschiedlichen elektrischen Energiequelle versorgt ist,
wobei die elektrische Energiequelle der Ausgang eines netzgespeisten, drehstromgespeisten oder mit einphasigem Wechselstrom versorgten Gleichrichters (2) ist,
wobei die Statorwicklungen des Elektromotors in Sternpunktschaltung verschaltet sind,
wobei zwischen der Statorwicklung und dem Schalter eine zusätzliche Induktivität (L) vorgesehen ist, **dadurch gekennzeichnet, dass**
die zusätzliche Induktivität (L) zwischen dem Sternpunkt und dem Schalter (S) vorgesehen ist, insbesondere zur Durchleitung des vom Schalter steuerbaren Stromes,
wobei die Wicklung der zusätzlichen Induktivität um denselben Kern, insbesondere Statorblechpaket, vorgesehen ist wie auch die Statorwicklungen,
insbesondere wobei die Statorwicklungen auf nach radial innen gerichteten Zähnen des Statorblechpakets vorgesehen sind und die zusätzliche Induktivität auf dem äußeren Umfang des Statorblechpakets vorgesehen ist.

2. Antriebssystem nach mindestens einem der vorangegangenen Ansprüche,
**dadurch gekennzeichnet, dass**
die elektrische Energiequelle mittels eines anderen Energiespeichers ausgeführt ist oder mittels einer ein- oder mehrphasigen Wechselspannungsquelle mit nachgeschaltetem Gleichrichter.

3. Antriebssystem nach mindestens einem der vorangegangenen Ansprüche,
**dadurch gekennzeichnet, dass**
einer der oder die Energiespeicher ein Kondensator, ein Ultracap-Kondensator oder eine Batterie ist.

4. Antriebssystem nach mindestens einem der vorangegangenen Ansprüche,
**dadurch gekennzeichnet, dass**
der Gleichrichter einphasig oder mehrphasig ausgeführt ist

5. Antriebssystem nach mindestens einem der vorangegangenen Ansprüche,
**dadurch gekennzeichnet, dass**
der Effektivwert oder Spitzenwert der den Gleichrichter versorgenden Spannungsquelle oder der den Schalter versorgenden, vom Energiespeicher unterschiedlichen elektrischen Energiequelle kleiner ist als die Ladespannung für den Energiespeicher, insbesondere also kleiner ist als die zum Laden des Energiespeichers notwendige Spannung, insbesondere Eingangsspannung des Wechselrichters.

6. Verfahren zum Betreiben eines Antriebssystems, insbesondere wobei das Antriebssystem nach einem der vorangegangenen Ansprüche ausgeführt ist,
umfassend einen aus einem Energiespeicher versorgbaren Elektromotor,
wobei über zumindest eine Statorwicklung des Elektromotors ein Strom aus einer vom Energiespeicher unterschiedlichen Energiequelle gesteuert zugeführt wird zum Laden des Energiespeichers,
wobei die elektrische Energiequelle der Ausgang eines netzgespeisten, drehstromgespeisten oder mit einphasigem Wechselstrom versorgten Gleichrichters (2) ist,
wobei die Statorwicklungen des Elektromotors in Sternpunktschaltung verschaltet sind,
wobei zwischen der Statorwicklung und dem Schalter eine zusätzliche Induktivität (L) vorgesehen ist, **dadurch gekennzeichnet, dass**
die zusätzliche Induktivität (L) zwischen dem Sternpunkt und dem Schalter (S) vorgesehen ist und den vom Schalter steuerbaren Stromes durchleitet,
wobei die Wärme der Wicklung der zusätzlichen Induktivität auf denselben Kern, insbesondere Statorblechpaket, geführt wird, wie auch die Wärme der Statorwicklungen.

7. Verfahren nach mindestens einem der vorangegangenen Ansprüche,
**dadurch gekennzeichnet, dass**
die Statorwicklungen mit einem Drehspannungssystem speisbar sind, das aus dem Energiespeicher erzeugbar ist.

8. Verfahren nach mindestens einem der vorangegangenen Ansprüche,
**dadurch gekennzeichnet, dass**
der Wechselrichter pulsweitenmoduliert oder blockkommutiert angesteuert wird, insbesondere zum motorischen oder generatorischen Betrieb des Elektromotors, und/oder dass
der Schalter pulsweitenmoduliert angesteuert wird.

9. Verfahren nach mindestens einem der vorangegangenen Ansprüche,
**dadurch gekennzeichnet, dass**
der Wechselrichter mehrphasig ausgeführt ist und die Ansteuersignale für die Schalter des Wechselrichters synchron, zweitversetzt synchron oder asynchron ausgeführt werden.

10. Verfahren nach mindestens einem der vorangegangenen Ansprüche,
**dadurch gekennzeichnet, dass**
das Nachladen des Energiespeichers zyklisch wiederholt wird, insbesondere das Nachladen abwechselnd mit dem motorischen oder generatorischen Betrieb des Elektromotors ausgeführt wird.

11. Verwendung einer Statorwicklung eines Elektromotors als Induktivität einer Ladeschaltung, insbesondere Buck-Converter oder Hochsetzsteller, zum Laden eines EnergieSpeichers gemäβ der Verfahrenschritte nach Anspruch 5.

## Claims

1. Drive system, comprising electric motor (11), inverter (1), energy store (C),
wherein the electric motor (11) can be fed by the inverter (1), which can be supplied from the energy store (C),
wherein at least one stator winding of the electric motor can be supplied with a current controllable by a switch (S), the current being supplied from an electrical energy source different from the energy store (C),
wherein the electrical energy source is the output of a rectifier (2) supplied by the mains, by a three-phase current or by a single-phase alternating current,
wherein the stator windings of the electric motor are connected in a star-point connection,
wherein an additional inductor (L) is provided between the stator winding and the switch (S), **characterised in that**
the additional inductor (L) is provided between the star point and the switch (S), in particular for transmitting the current controllable by the switch,
wherein the winding of the additional inductor (L) is provided around the same core, in particular stator laminated core, as the stator windings,
in particular wherein the stator windings are provided on radially inwardly directed teeth of the stator laminated core and the additional inductor is provided on the outer circumference of the stator laminated core.

2. Drive system according to at least one of the preceding claims,
**characterised in that**
the electrical energy source is embodied by means of another energy store or by means of a single- or multi-phase alternating voltage source with downstream rectifier.

3. Drive system according to at least one of the preceding claims,
**characterised in that**
one of the energy stores or the energy stores is/are a capacitor, an ultra capacitor or a battery.

4. Drive system according to at least one of the preceding claims,
**characterised in that**
the rectifier is of single-phase or multi-phase design.

5. Drive system according to at least one of the preceding claims,
**characterised in that**
the effective value or peak value of the voltage source supplying the rectifier or of the electrical energy source supplying the switch and differing from the energy store is less than the charging voltage for the energy store, in particular therefore less than the voltage necessary for charging the energy store, in particular the input voltage of the inverter.

6. Method for operating a drive system, in particular wherein the drive system is designed according to one of the preceding claims,
comprising an electric motor which can be supplied from an energy store,
wherein a current is supplied in a controlled manner from an energy source different from the energy store, via at least one stator winding of the electric motor, in order to charge the energy store,
wherein the electrical energy source is the output of a rectifier (2) supplied by the mains, by a three-phase current or by a single-phase alternating current,
wherein the stator windings of the electric motor are connected in a star-point connection,
wherein an additional inductor (L) is provided between the stator winding and the switch, **characterised in that**
the additional inductor (L) is provided between the star point and the switch (S) and transmits the current controllable by the switch,
wherein the heat of the winding of the additional inductor is led onto the same core, in particular stator laminated core, as also the heat of the stator windings.

7. Method according to at least one of the preceding claims,
**characterised in that**
the stator windings can be fed by a three-phase voltage system which can be generated from the energy store.

8. Method according to at least one of the preceding claims,
**characterised in that**
the inverter is driven by pulse width modulation or block commutation, in particular for motor or generator operation of the electric motor,
and/or **in that**
the switch is driven by pulse width modulation.

9. Method according to at least one of the preceding claims,
**characterized in that**
the inverter is of multi-phase design and the drive signals for the switches of the inverter are of synchronous, time-delayed synchronous, or asynchronous design.

10. Method according to at least one of the preceding claims,
**characterized in that**
the recharging of the energy store is repeated cyclically, in particular the recharging is carried out alternately with the motor or generator operation of the electric motor.

11. Use of a stator winding of an electric motor as inductor of a charging circuit, in particular buck converter or step-up converter, for charging an energy store in accordance with the method steps according to Claim 6.

## Revendications

1. Système d'entraînement comprenant un moteur électrique (11), un onduleur (1) et un accumulateur d'énergie (C),
ledit moteur électrique (11) pouvant être alimenté par ledit onduleur (1) pouvant être desservi à partir dudit accumulateur d'énergie (C),
sachant qu'un courant, pouvant être commandé par un interrupteur (S) et provenant d'une source d'énergie électrique différant dudit accumulateur d'énergie (C), peut être délivré à au moins un enroulement statorique dudit moteur électrique,
ladite source d'énergie électrique se présentant comme la sortie d'un redresseur (2) à alimentation par le réseau, qui est alimenté en courant triphasé ou reçoit un courant alternatif monophasé,
les enroulements statoriques dudit moteur électrique étant raccordés par un circuit à connexion en étoile,
sachant qu'une inductance additionnelle (L) est prévue entre l'enroulement statorique et l'interrupteur (S), **caractérisé par le fait que**
l'inductance additionnelle (L) est prévue entre le point neutre et l'interrupteur (S), notamment en vue de la circulation du courant pouvant être commandé par ledit interrupteur,
sachant que l'enroulement de ladite inductance additionnelle (L) est prévu autour du même noyau que les enroulements statoriques, notamment constitué d'un empilement de tôles statoriques,
sachant, en particulier, que lesdits enroulements statoriques sont prévus sur des dents dudit empilement de tôles statoriques qui sont orientées vers l'intérieur dans le sens radial, et que ladite inductance additionnelle est prévue sur le pourtour extérieur dudit empilement de tôles statoriques.

2. Système d'entraînement selon au moins l'une des revendications précédentes,
**caractérisé par le fait que**
la source d'énergie électrique revêt la forme d'un autre accumulateur d'énergie, ou d'une source de tension alternative monophasée ou polyphasée, en aval de laquelle un redresseur est connecté.

3. Système d'entraînement selon au moins l'une des revendications précédentes,
**caractérisé par le fait que**
l'un des accumulateurs d'énergie, ou les accumulateurs d'énergie, est (sont) un condensateur, un condensateur à double couche, ou une batterie,

4. Système d'entraînement selon au moins l'une des revendications précédentes,
**caractérisé par le fait que**
le redresseur est de réalisation monophasée ou polyphasée.

5. Système d'entraînement selon au moins l'une des revendications précédentes,
**caractérisé par le fait que**
la valeur effective ou valeur de crête de la source de tension alimentant le redresseur, ou de la source d'énergie électrique qui diffère de l'accumulateur d'énergie et alimente l'interrupteur, est inférieure à la tension de charge dédiée audit accumulateur d'énergie et est donc inférieure, en particulier, à la tension nécessaire pour charger ledit accumulateur d'énergie, notamment à la tension d'entrée de l'onduleur.

6. Procédé d'actionnement d'un système d'entraînement, ledit système d'entraînement étant réalisé, en particulier, conformément à l'une des revendications précédentes,
comprenant un moteur électrique pouvant être desservi à partir d'un accumulateur d'énergie,
sachant qu'un courant provenant d'une source d'énergie différant de l'accumulateur d'énergie est délivré par l'intermédiaire d'au moins un enroulement statorique dudit moteur électrique, de manière commandée, en vue de charger ledit accumulateur d'énergie,
la source d'énergie électrique se présentant comme la sortie d'un redresseur (2) à alimentation par le réseau, qui est alimenté en courant triphasé ou reçoit un courant alternatif monophasé,
les enroulements statoriques dudit moteur électrique étant raccordés par un circuit à connexion en étoile,
sachant qu'une inductance additionnelle (L) est prévue entre l'enroulement statorique et l'interrupteur, **caractérisé par le fait que**
l'inductance additionnelle (L) est prévue entre le point neutre et l'interrupteur (S), et assure la circulation du courant pouvant être commandé par ledit interrupteur,
la chaleur de l'enroulement de ladite inductance additionnelle étant dirigée, tout comme la chaleur des enroulements statoriques, vers le même noyau notamment constitué d'un empilement de tôles statoriques.

7. Procédé selon au moins l'une des revendications précédentes,
**caractérisé par le fait que**
les enroulements statoriques peuvent être alimentés par un système à tension triphasée, pouvant être généré à partir de l'accumulateur d'énergie.

8. Procédé selon au moins l'une des revendications précédentes,
**caractérisé par le fait que**
l'onduleur est activé avec modulation de largeurs d'impulsions ou avec commutation par blocs, notamment en vue de l'actionnement du moteur électrique en mode moteur ou générateur ;
et/ou **par le fait que**
l'interrupteur est activé avec modulation de largeurs d'impulsions.

9. Procédé selon au moins l'une des revendications précédentes,
**caractérisé par le fait que**
l'onduleur est de réalisation polyphasée, et les signaux d'activation dévolus aux interrupteurs dudit onduleur sont de conception synchrone, synchrone avec décalage double, ou asynchrone.

10. Procédé selon au moins l'une des revendications précédentes,
**caractérisé par le fait que**
le rechargement de l'accumulateur d'énergie est réitéré cycliquement, ledit rechargement étant notamment exécuté en alternance avec l'actionnement du moteur électrique en mode moteur ou générateur.

11. Utilisation d'un enroulement statorique d'un moteur électrique en tant qu'inductance d'un circuit de chargement, en particulier un convertisseur Buck ou un convertisseur survolteur, en vue de charger un accumulateur d'énergie conformément aux étapes du procédé selon la revendication 6.
